# EUROPEAN PATENT APPLICATION

(11) **EP 4 801 133 A1**
(43) Date of publication of application: **02.09.2026**
(21) Application number: 24890046.6
(22) Date of filing: 30.05.2024
(51) Int. Cl.: H04W 56/00

(54) **SYNCHRONIZATION SIGNAL TRANSMISSION METHOD, APPARATUS AND SYSTEM**

(30) Priority: 14.11.2023 CN 202311524713
(71) Applicant: Huawei Technologies Co., Ltd., Shenzhen, Guangdong 518129 (CN)
(72) Inventor: ZHANG, Zhang, Shenzhen, Guangdong 518129 (CN); WANG, Fan, Shenzhen, Guangdong 518129 (CN)
(74) Representative: MERH-IP Matias Erny Reichl Hoffmann Patentanwälte PartG mbB
(86) International application number: PCT/CN2024/096462
(87) International publication number: WO 2025/102676

(57) **Abstract**

Embodiments of this application provide a synchronization signal transmission method, an apparatus, and a system, aiming to provide a synchronization signal that is compatible with different types of terminal devices. The method includes: determining a synchronization signal that includes a plurality of subsequences, where each of the plurality of subsequences is mapped to an orthogonal frequency division multiplexing OFDM subcarrier, and a bandwidth of the synchronization signal is greater than or equal to that of any one of the plurality of subsequences; and sending the synchronization signal to a terminal device, where the synchronization signal is used by the terminal device to perform downlink synchronization.

## Description

This application claims priority to Chinese Patent Application No. 202311524713.3, filed with the China National Intellectual Property Administration on November 14, 2023 and entitled "SYNCHRONIZATION SIGNAL TRANSMISSION METHOD, APPARATUS, AND SYSTEM", which is incorporated herein by reference in its entirety.

### TECHNICAL FIELD

This application relates to the field of communication technologies, and in particular, to a synchronization signal transmission method, an apparatus, and a system.

### BACKGROUND

To ensure successful initial access of a terminal device to a cellular network, a network device periodically sends synchronization signals to the terminal device. For example, when the cellular network is a long term evolution (long term evolution, LTE) network or a new radio (new radio, NR) network, the synchronization signals may include a primary synchronization signal (primary synchronization signal, PSS) and a secondary synchronization signal (secondary synchronization signal, SSS). The network device may further periodically send a physical broadcast channel (physical broadcast channel, PBCH) to the terminal device. In an NR system, the synchronization signals and the PBCH are collectively referred to as a synchronization signal and physical broadcast channel block (synchronization signal and PBCH block, SSB).

Currently, the cellular network supports both wideband terminal devices and narrowband terminal devices, such as narrowband Internet of Things (narrowband internet of things, NB-IoT) terminal devices. Synchronization signals designed for wideband terminal devices occupy a wide bandwidth that exceeds the frequency domain range that narrowband terminal devices are capable of receiving, preventing narrowband terminal devices from properly receiving such signals. To address this issue, different synchronization signals are designed for wideband terminal devices and narrowband terminal devices, which increases the complexity of cellular network system design.

### SUMMARY

Embodiments of this application provide a synchronization signal transmission method, an apparatus, and a system, aiming to provide a synchronization signal compatible with different types of terminal devices.

To achieve the foregoing objectives, the following technical solutions are used in embodiments of this application.

According to a first aspect, a synchronization signal transmission method is provided. An apparatus that performs the synchronization signal transmission method may be a network device, or may be a module used in the network device, for example, a chip or a chip system. The synchronization signal transmission method includes: determining a synchronization signal including a plurality of subsequences, where the plurality of subsequences form a long sequence, each of the plurality of subsequences is mapped to an orthogonal frequency division multiplexing OFDM subcarrier, and a bandwidth of the synchronization signal is greater than or equal to a bandwidth of any one of the plurality of subsequences; and sending the synchronization signal to a terminal device, where the synchronization signal is used by the terminal device to perform downlink synchronization.

In the synchronization signal transmission method provided in this embodiment of this application, the synchronization signal may include the plurality of subsequences, so that a wideband terminal device may receive the synchronization signal including all the subsequences, and a narrowband terminal device may receive one or more subsequences in the synchronization signal. For the wideband terminal device and the narrowband terminal device, this embodiment of this application may adopt a same synchronization signal sending structure, so that complexity of designing a cellular network system can be reduced, and technical effect of saving time-frequency resources can be achieved.

With reference to the first aspect, in a possible implementation, a quantity of subsequences included in the synchronization signal is the same as a length of each subsequence included in the synchronization signal. Simulation results show that in this solution, the subsequence has good ambiguity function performance. Specifically, the correlation value of the sequence has a low sidelobe at an incorrect delay and/or Doppler frequency offset.

With reference to the first aspect, in a possible implementation, a subsequence included in the synchronization signal is a maximal length linear shift register sequence or a polyphase sequence.

With reference to the first aspect, in a possible implementation, a first subsequence included in the synchronization signal is a polyphase sequence, and a general term of the first subsequence satisfies the following formula: ${x}_{k} \left(n\right) = {e}^{- \frac{2 πj \left({an}^{p}+{bn}^{q}+cn+d\right)}{N}} ,$ where
a, b, c, d, p, and q are constants; n=1, 2, ..., N, N represents a length of the first subsequence, and N is a positive integer; and k=1, 2, ..., K, K represents the quantity of subsequences included in the synchronization signal, and K is a positive integer. Specifically, p=3 and q=2.

With reference to the first aspect, in a possible implementation, the synchronization signal includes a primary synchronization signal PSS and/or a secondary synchronization signal SSS.

With reference to the first aspect, in a possible implementation, a quantity of subsequences included in the PSS is the same as a quantity of subsequences included in the SSS, and/or a length of each subsequence included in the synchronization signal is the same. In this solution, quantities and/or lengths of subsequences in the PSS and the SSS are the same. This makes the terminal device, especially a second-type terminal device, have equivalent performance in receiving the PSS and the SSS.

With reference to the first aspect, in a possible implementation, each subsequence included in the PSS or the SSS occupies a same time domain resource. In this solution, the plurality of subsequences included in the PSS or the SSS may be mapped to a plurality of consecutive OFDM subcarriers. Because in the existing synchronization signal transmission method, the long sequence included in the synchronization signal is mapped to the plurality of consecutive OFDM subcarriers. Therefore, this solution can improve compatibility with the existing synchronization signal transmission method.

With reference to the first aspect, in a possible implementation, each subsequence included in the PSS occupies a same time domain resource, and each subsequence included in the SSS occupies a same frequency domain resource. In this solution, for the terminal device, especially the second-type terminal device, the SSS may not be limited by a bandwidth, so that the SSS may include more subsequences, or the SSS may carry more information.

With reference to the first aspect, in a possible implementation, the method further includes: sending a first physical broadcast channel PBCH, where a bandwidth occupied by the first PBCH is wider than or equal to the bandwidth occupied by the synchronization signal. In this solution, respective PBCHs may be designed for two different types of terminal devices. The first PBCH is applicable to the wideband terminal device because the first PBCH occupies a large quantity of frequency domain resources.

With reference to the first aspect, in a possible implementation, a frequency domain resource occupied by the first PBCH includes a frequency domain resource occupied by the synchronization signal.

With reference to the first aspect, in a possible implementation, the method further includes: sending a second PBCH, where the bandwidth occupied by the first PBCH is wider than a bandwidth occupied by the second PBCH. In this solution, respective PBCHs may be designed for two different types of terminal devices. The second PBCH is applicable to the narrowband terminal device because the second PBCH occupies a small quantity of frequency domain resources.

With reference to the first aspect, in a possible implementation, the frequency domain resource occupied by the synchronization signal includes a frequency domain resource occupied by the second PBCH.

With reference to the first aspect, in a possible implementation, the synchronization signal includes indication information, and the indication information indicates a time domain resource and/or the frequency domain resource occupied by the second PBCH. In this solution, a time-frequency resource position of the second PBCH may be flexible, and the synchronization signal may carry more information.

With reference to the first aspect, in a possible implementation, the synchronization signal includes a beam index, and the beam index is used by the terminal device to send data and/or signaling on a beam corresponding to the beam index. This solution may be applied to non-initial access of the terminal device. For example, the terminal device requests to access the network device again after sleep ends. In this case, the terminal device does not need to receive the PBCH, and may directly send data and/or signaling to the network device on the beam corresponding to the beam index, thereby achieving technical effect of energy saving.

According to a second aspect, a synchronization signal transmission method is provided. An apparatus that performs the synchronization signal transmission method may be a terminal device, or may be a module used in the terminal device, for example, a chip or a chip system. The synchronization signal transmission method includes: when the terminal device is a first-type terminal device, receiving a synchronization signal from a network device, where the synchronization signal includes a plurality of subsequences, the plurality of subsequences form a long sequence, each of the plurality of subsequences is mapped to an orthogonal frequency division multiplexing OFDM subcarrier, and a bandwidth of the synchronization signal is greater than or equal to a bandwidth of any one of the plurality of subsequences; and performing downlink synchronization based on the synchronization signal; or when the terminal device is a second-type terminal device, receiving one or more subsequences in the synchronization signal from the network device; and performing downlink synchronization based on the one or more subsequences in the synchronization signal, where a receive bandwidth by the first-type terminal device is wider than a receive bandwidth by the second-type terminal device.

With reference to the second aspect, in a possible implementation, a quantity of subsequences included in the synchronization signal is the same as a length of each subsequence included in the synchronization signal.

With reference to the second aspect, in a possible implementation, a subsequence included in the synchronization signal is a maximal length linear shift register sequence or a polyphase sequence.

With reference to the second aspect, in a possible implementation, a first subsequence included in the synchronization signal is a polyphase sequence, and a general term of the first subsequence satisfies the following formula: ${x}_{k} \left(n\right) = {e}^{- \frac{2 πj \left({an}^{p}+{bn}^{q}+cn+d\right)}{N}} ,$ where
a, b, c, d, p, and q are constants; n=1, 2, ..., N, N represents a length of the first subsequence, and N is a positive integer; and k=1, 2, ..., K, K represents the quantity of subsequences included in the synchronization signal, and K is a positive integer.

With reference to the second aspect, in a possible implementation, the synchronization signal includes a primary synchronization signal PSS and/or a secondary synchronization signal SSS.

With reference to the second aspect, in a possible implementation, a quantity of subsequences included in the PSS is the same as a quantity of subsequences included in the SSS, and/or a length of each subsequence included in the synchronization signal is the same.

With reference to the second aspect, in a possible implementation, each subsequence included in the PSS or the SSS occupies a same time domain resource.

With reference to the second aspect, in a possible implementation, each subsequence included in the PSS occupies a same time domain resource, and each subsequence included in the SSS occupies a same frequency domain resource.

With reference to the second aspect, in a possible implementation, the terminal device is the first-type terminal device; and the method further includes: receiving a first PBCH, where a bandwidth occupied by the first PBCH is wider than or equal to the bandwidth occupied by the synchronization signal.

With reference to the second aspect, in a possible implementation, a frequency domain resource occupied by the first PBCH includes a frequency domain resource occupied by the synchronization signal.

With reference to the second aspect, in a possible implementation, the terminal device is the second-type terminal device, and the method further includes: receiving a second PBCH, where a bandwidth occupied by the first PBCH is wider than a bandwidth occupied by the second PBCH.

With reference to the second aspect, in a possible implementation, the frequency domain resource occupied by the synchronization signal includes a frequency domain resource occupied by the second PBCH.

With reference to the second aspect, in a possible implementation, the synchronization signal includes indication information, and the indication information indicates a time domain resource and/or the frequency domain resource occupied by the second PBCH.

With reference to the second aspect, in a possible implementation, the synchronization signal includes a beam index, and the beam index is used by the terminal device to send data and/or signaling to the network device on a beam corresponding to the beam index.

According to a third aspect, a communication apparatus is provided, to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus includes a synchronization signal determining module and a transceiver module. The synchronization signal determining module is configured to determine a synchronization signal including a plurality of subsequences, where the plurality of subsequences form a long sequence, each of the plurality of subsequences is mapped to an orthogonal frequency division multiplexing OFDM subcarrier, and a bandwidth of the synchronization signal is greater than or equal to a bandwidth of any one of the plurality of subsequences; and the transceiver module is configured to send the synchronization signal to a terminal device, where the synchronization signal is used by the terminal device to perform downlink synchronization.

With reference to the third aspect, in a possible implementation, a quantity of subsequences included in the synchronization signal is the same as a length of each subsequence included in the synchronization signal.

With reference to the third aspect, in a possible implementation, a subsequence included in the synchronization signal is a maximal length linear shift register sequence or a polyphase sequence.

With reference to the third aspect, in a possible implementation, a first subsequence included in the synchronization signal is a polyphase sequence, and a general term of the first subsequence satisfies the following formula: ${x}_{k} \left(n\right) = {e}^{- \frac{2 πj \left({an}^{p}+{bn}^{q}+cn+d\right)}{N}} ,$ where
a, b, c, d, p, and q are constants; n=1, 2, ..., N, N represents a length of the first subsequence, and N is a positive integer; and k=1, 2, ..., K, K represents the quantity of subsequences included in the synchronization signal, and K is a positive integer.

With reference to the third aspect, in a possible implementation, the synchronization signal includes a primary synchronization signal PSS and/or a secondary synchronization signal SSS.

With reference to the third aspect, in a possible implementation, a quantity of subsequences included in the PSS is the same as a quantity of subsequences included in the SSS, and/or a length of each subsequence included in the synchronization signal is the same.

With reference to the third aspect, in a possible implementation, each subsequence included in the PSS or the SSS occupies a same time domain resource.

With reference to the third aspect, in a possible implementation, each subsequence included in the PSS occupies a same time domain resource, and each subsequence included in the SSS occupies a same frequency domain resource.

With reference to the third aspect, in a possible implementation, the transceiver module is further configured to send a first physical broadcast channel PBCH, where a bandwidth occupied by the first PBCH is wider than or equal to the bandwidth occupied by the synchronization signal.

With reference to the third aspect, in a possible implementation, a frequency domain resource occupied by the first PBCH includes a frequency domain resource occupied by the synchronization signal.

With reference to the third aspect, in a possible implementation, the transceiver module is further configured to send a second PBCH, where the bandwidth occupied by the first PBCH is wider than a bandwidth occupied by the second PBCH.

With reference to the third aspect, in a possible implementation, the frequency domain resource occupied by the synchronization signal includes a frequency domain resource occupied by the second PBCH.

With reference to the third aspect, in a possible implementation, the synchronization signal includes indication information, and the indication information indicates a time domain resource and/or the frequency domain resource occupied by the second PBCH.

With reference to the third aspect, in a possible implementation, the synchronization signal includes a beam index, and the beam index is used by the terminal device to send data and/or signaling to the network device on a beam corresponding to the beam index.

According to a fourth aspect, a communication apparatus is provided, to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible implementation, the communication apparatus includes a transceiver module and a synchronization module. When the communication apparatus is a first-type communication apparatus, the transceiver module is configured to receive a synchronization signal from a network device, where the synchronization signal includes a plurality of subsequences, the plurality of subsequences form a long sequence, each of the plurality of subsequences is mapped to an orthogonal frequency division multiplexing OFDM subcarrier, and a bandwidth of the synchronization signal is greater than or equal to a bandwidth of any one of the plurality of subsequences; and the synchronization module is configured to perform downlink synchronization based on the synchronization signal; or when the communication apparatus is a second-type communication apparatus, the transceiver module is configured to receive one or more subsequences in the synchronization signal from the network device; and the synchronization module is configured to perform downlink synchronization based on the one or more subsequences in the synchronization signal, where a receive bandwidth by the first-type communication apparatus is wider than a receive bandwidth by the second-type communication apparatus.

With reference to the fourth aspect, in a possible implementation, a quantity of subsequences included in the synchronization signal is the same as a length of each subsequence included in the synchronization signal.

With reference to the fourth aspect, in a possible implementation, a subsequence included in the synchronization signal is a maximal length linear shift register sequence or a polyphase sequence.

With reference to the fourth aspect, in a possible implementation, a first subsequence included in the synchronization signal is a polyphase sequence, and a general term of the first subsequence satisfies the following formula: ${x}_{k} \left(n\right) = {e}^{- \frac{2 πj \left({an}^{p}+{bn}^{q}+cn+d\right)}{N}} ,$ where
a, b, c, d, p, and q are constants; n=1, 2, ..., N, N represents a length of the first subsequence, and N is a positive integer; and k=1, 2, ..., K, K represents the quantity of subsequences included in the synchronization signal, and K is a positive integer.

With reference to the fourth aspect, in a possible implementation, the synchronization signal includes a primary synchronization signal PSS and/or a secondary synchronization signal SSS.

With reference to the fourth aspect, in a possible implementation, a quantity of subsequences included in the PSS is the same as a quantity of subsequences included in the SSS, and/or a length of each subsequence included in the synchronization signal is the same.

With reference to the fourth aspect, in a possible implementation, each subsequence included in the PSS or the SSS occupies a same time domain resource.

With reference to the fourth aspect, in a possible implementation, each subsequence included in the PSS occupies a same time domain resource, and each subsequence included in the SSS occupies a same frequency domain resource.

With reference to the fourth aspect, in a possible implementation, the communication apparatus is the first-type communication apparatus, and the transceiver module is further configured to receive a first PBCH, where a bandwidth occupied by the first PBCH is wider than or equal to the bandwidth occupied by the synchronization signal.

With reference to the fourth aspect, in a possible implementation, a frequency domain resource occupied by the first PBCH includes a frequency domain resource occupied by the synchronization signal.

With reference to the fourth aspect, in a possible implementation, the communication apparatus is the second-type communication apparatus, and the transceiver module is further configured to receive a second PBCH, where a bandwidth occupied by a first PBCH is wider than a bandwidth occupied by the second PBCH.

With reference to the fourth aspect, in a possible implementation, the frequency domain resource occupied by the synchronization signal includes a frequency domain resource occupied by the second PBCH.

With reference to the fourth aspect, in a possible implementation, the synchronization signal includes indication information, and the indication information indicates a time domain resource and/or the frequency domain resource occupied by the second PBCH.

With reference to the fourth aspect, in a possible implementation, the synchronization signal includes a beam index, and the beam index is used by the communication apparatus to send data and/or signaling to the network device on a beam corresponding to the beam index.

According to a fifth aspect, a communication apparatus is provided, including a processor. The processor is configured to: after being coupled to a memory and reading computer instructions stored in the memory, perform, based on the instructions, the method according to the first aspect or the second aspect.

With reference to the fifth aspect, in a possible implementation, the communication apparatus further includes a memory, and the memory is configured to store the computer instructions.

With reference to the fifth aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, a related circuit, or the like.

With reference to the fifth aspect, in a possible implementation, the communication apparatus may be a chip or a chip system. When the communication apparatus is the chip system, the communication apparatus may include a chip, or may include a chip and another discrete device.

With reference to the fifth aspect, in a possible implementation, when the communication apparatus is the chip or the chip system, the communication interface may be an input/output interface, an interface circuit, an output circuit, an input circuit, a pin, a related circuit, or the like on the chip or the chip system. The processor may alternatively be embodied as a processing circuit or a logic circuit.

According to a sixth aspect, a communication system is provided, including a network device that performs the method according to the first aspect and a terminal device that performs the method according to the second aspect.

According to a seventh aspect, a computer-readable storage medium is provided. The computer-readable storage medium stores instructions. When the instructions are run on a computer, the computer is enabled to perform the method according to the first aspect or the second aspect.

According to an eighth aspect, a computer program product including instructions is provided. When the computer program product runs on a computer, the computer is enabled to perform the method according to any one of the first aspect or the second aspect.

For technical effect brought by any one of possible implementations of the second aspect to the eighth aspect, refer to the technical effect brought by the first aspect or different implementations of the first aspect. Details are not described herein again.

### BRIEF DESCRIPTION OF DRAWINGS

FIG. 1 is a diagram of an architecture of a communication system according to an embodiment of this application;
FIG. 2 is a diagram 1 of a structure of a communication apparatus according to an embodiment of this application;
FIG. 3 is a flowchart of a synchronization signal transmission method according to an embodiment of this application;
FIG. 4 is a flowchart 1 of a method for transmitting a synchronization signal and a PBCH according to an embodiment of this application;
FIG. 5 is a flowchart 2 of a method for transmitting a synchronization signal and a PBCH according to an embodiment of this application;
FIG. 6 is a diagram of a synchronization signal and a PBCH according to an embodiment of this application;
FIG. 7 is another diagram of a synchronization signal and a PBCH according to an embodiment of this application;
FIG. 8 is a diagram 2 of a structure of a communication apparatus according to an embodiment of this application; and
FIG. 9 is a diagram 3 of a structure of a communication apparatus according to an embodiment of this application.

### DESCRIPTION OF EMBODIMENTS

For ease of understanding the technical solutions in embodiments of this application, the following first briefly describes technologies or terms related to this application.

### 1. Application scenarios for sequences

A sequence may be an ordered set of numbers or elements. In different scenarios, a specific sequence may implement specific functions by utilizing its structure and properties. The following describes the application scenarios and the functions of sequences.

In a communication system, a terminal device needs to access a network after being powered on. However, the terminal device does not know prior information about the network, and therefore cannot properly receive information from a network device. Therefore, the terminal device first needs to perform network search, and determine information such as timing information and a frequency resource used by the network. To enable the terminal device to obtain the information, the network device may periodically send, to the terminal device, synchronization signals carried on a synchronization channel. The synchronization signal may be generated based on a predefined sequence or one of a plurality of predefined long sequences. Correspondingly, the terminal device may search for the synchronization signal on a plurality of preset frequencies based on the predefined long sequence or a long sequence that may be received. Once the terminal device detects the synchronization signal, this indicates successful network detection. Then, the terminal device may perform time synchronization, frequency offset estimation, and compensation, to facilitate subsequent reception of system broadcast information and other signals. It can be learned that the sequence plays an important role in the initial synchronization process. Further, detection performance, and robustness against frequency offset, interference, and noise determine whether the terminal device can successfully access the network and the speed of successful network access. The detection performance of the sequence may be represented by sequence correlation.

Since the synchronization signal is sent by the network device to the terminal device, the synchronization signal may also be referred to as a downlink synchronization signal, and the synchronization process may also be referred to as downlink synchronization. In addition to downlink synchronization, the sequence may also be applied to uplink synchronization. Specifically, after obtaining information required for accessing the network, the terminal device may attempt to communicate with the network device, to notify the network device of its existence and complete the subsequent access procedure with the network device. Similar to downlink synchronization, the terminal device may send an uplink synchronization signal on a reserved random access resource. The uplink synchronization signal may include an uplink long sequence. Correspondingly, the network device may detect an uplink synchronization signal on each reserved random access resource to determine whether a terminal device is requesting network access. When detecting the uplink synchronization signal, the network device may further estimate an uplink timing advance parameter and send the estimation result to the terminal device. The terminal device may adjust its uplink transmission timing based on the estimation result, so that uplink transmissions of a plurality of terminal devices can be synchronized at the frame, subframe, slot, or symbol level. It can be learned that detection performance, and robustness against frequency offset, interference, and noise of the sequence also determine detection performance of an uplink random access request and estimation performance of the uplink timing advance parameter.

In addition to a synchronization scenario, the sequence may also be applied to a multi-access system. For example, in code division multiple access, the sequence may be used as a spreading code, and different terminal devices use different spreading codes. Because the spreading codes may be orthogonal to each other, during reception the network device may use the spreading code of a specific terminal device to mitigate interference from other terminal devices, thereby completing reception of information from that specific terminal device. Similarly, in resource reuse and information transmission scenarios, for example, in pilot reuse scenarios, sequence may be used as a means of code division. It can be learned that sequence correlation may affect performance of the multi-access system.

Sequences may also be applied to the design of low peak to average power ratio (peak to average power ratio, PAPR) signals. For a communication system that adopts orthogonal frequency division multiplexing (orthogonal frequency division multiplexing, OFDM) or similar frequency domain modulation waveforms, one of important factors to consider may be the PAPR of a signal, especially the PAPR of an uplink signal, including the PAPR of an uplink random access signal and/or an uplink pilot signal. In such a communication system, a low PAPR signal may be designed by using characteristics of a specific sequence.

In future communication systems, for example, 6th generation (6th generation, 6G) mobile communication systems, the integration of communication and sensing will be a new major feature. In research on integrated sensing and communication, sequences may affect the implementation and performance of sensing functions. Specifically, during wireless transmission, a signal experiences a delay due to transmission distance and a frequency offset, namely, a Doppler frequency offset due to relative movement between the transmitter and the receiver. A target to be detected may send a specific sequence that is known to both the transmitter and the receiver. Correspondingly, the receiver may detect a delay and a Doppler frequency offset of the received specific sequence, transmitted through a channel, relative to the specific sequence, to calculate the distance and speed of the target to be detected. To achieve good sensing performance, the specific sequence needs to have good ambiguity function performance. Specifically, the correlation value of the specific sequence exhibits a peak at the correct delay and/or Doppler frequency offset, and exhibits a low sidelobe at an incorrect delay and/or Doppler frequency offset.

In addition to the foregoing application scenario, sequences are also widely used in scenarios including scrambling, encryption, and codebook generation for precoding in communication systems. In conclusion, future research trends on sequences lie in achieving better performance in resolving classical problems, as well as designing new sequences and expanding new application scenarios. Because there are numerous and complicated definitions of sequences in existing systems, and there is no systematic definition method, there is an urgent need to study a systematic sequence generation method that is applicable to a plurality of scenarios and that has a plurality of functions in future communication systems.

### 2. Existing synchronization signal transmission method

In a possible implementation, synchronization signals that include a PSS and an SSS may be sent in an SSB. In embodiments of this application, a narrowband terminal device may have narrowband receiving or narrowband transceiving capabilities, and a wideband terminal device may have wideband receiving or transceiving capabilities. This is described herein once for all, and details are not described below again.

In an LTE network, a transmission period of the PSS or the SSS may be 5 milliseconds (ms), and a transmission period of a PBCH may be 10 ms. A length of a long sequence included in the PSS may be 63, and the SSS may include two long sequences with a length of 31. The PBCH may occupy six resource blocks (resource block, RB).

In an NR network, a transmission period of an SSB used for initial access may be 20 ms. The long sequence included in the PSS may be a maximal length linear shift register sequence with a length of 127, and the long sequence included in the SSS may be a Gold sequence with a length of 127. The maximal length linear shift register sequence (maximal length linear shift register sequence) may also be referred to as an m-sequence. The PSS and the SSS each may occupy 12 RBs, and the PBCH may occupy 20 RBs. In the NR network, the SSB may include a PSS, an SSS, and a PBCH.

In the LTE network or the NR network, the PSS or the SSS sent by a base station to UE includes a long sequence. To normally receive the synchronization signal, a minimum bandwidth of a terminal device that needs to perform access needs to meet a bandwidth requirement of the synchronization signal, that is, a bandwidth of the terminal device that needs to perform access is greater than or equal to a bandwidth of the synchronization signal. Therefore, the foregoing design is applicable only to the wideband terminal device.

If the foregoing design is applied to the narrowband terminal device, the narrowband terminal device cannot normally receive the synchronization signal applicable to the wideband terminal device. Therefore, in the existing synchronization signal transmission method, a synchronization signal is additionally designed for the narrowband terminal device. This may increase signal design complexity on a network device side, and causes a waste of time-frequency resources.

A scenario in which terminal devices with different capabilities access a same network is likely to be a scenario of future wireless communication. For example, the narrowband terminal device and the wideband terminal device need to access a network simultaneously. To implement this scenario more simply, a synchronization signal that can be simultaneously applicable to both the wideband terminal device and the narrowband terminal device needs to be designed. In this embodiment of this application, the network device side does not distinguish between types of terminal devices, and uniformly sends a synchronization signal including a plurality of subsequences. Correspondingly, the terminal device may adopt different receiving manners based on a type of the terminal device.

The following describes the technical solutions in embodiments of this application with reference to the accompanying drawings in embodiments of this application. Unless otherwise specified, "/" in the descriptions of this application indicates an "or" relationship between associated objects. For example, A/B may indicate A or B. In this application, "and/or" indicates only an association relationship for describing associated objects and indicates that three relationships may exist. For example, A and/or B may indicate the following three cases: Only A exists, both A and B exist, and only B exists. A and B may be singular or plural. In addition, in the descriptions of this application, unless otherwise specified, "a plurality of" means two or more than two. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

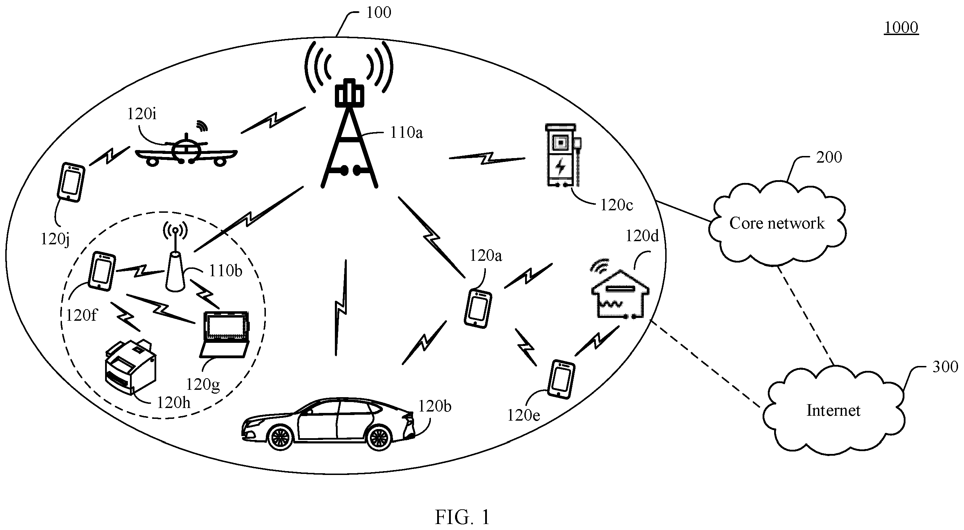

A diagram of an architecture of a mobile communication system in FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal device (for example, 120a to 120j in FIG. 1). The terminal device is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device, which are not shown in FIG. 1.

The radio access network device is an access device used by the terminal device to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6G mobile communication system, a base station in a future mobile communication system, an access node in a Wi-Fi system, or the like. In another possible scenario, a plurality of radio access network (radio access network, RAN) nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. Embodiments of this application may be implemented by the DU or the RU.

The radio access network device may be a macro base station (like 110a in FIG. 1), or may be a micro base station or an indoor base station (like 110b in FIG. 1), or may be a relay node, a donor node, or the like. A specific technology and a specific device form that are used by the radio access network device are not limited in embodiments of this application. For ease of description, the following provides descriptions by using an example in which the radio access network device is a base station.

The terminal devicewith the wireless transceiver function may send a signal to a base station or receive a signal from a base station. The terminal device may also be referred to as a terminal, user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal device may be a mobile phone, a tablet computer, a computerwith the wireless transceiver function, a wearable device, a vehicle, an uncrewed aerial vehicle, a helicopter, an airplane, a ship, a robot, a robotic arm, a smart home device, or the like. A specific technology and a specific device form that are used by the terminal device are not limited in embodiments of this application.

The base station and the terminal device may be fixed or movable. The base station and the terminal device may be deployed on land, including an indoor or outdoor deployment, and a handheld or a vehicle-mounted deployment; or may be deployed on water; or may be deployed on an airplane, a balloon, and a man-made satellite. Application scenarios of the base station and the terminal device are not limited in embodiments of this application.

Roles of the base station and the terminal device may be relative. For example, a helicopter or uncrewed aerial vehicle 120i in FIG. 1 may be configured as a mobile base station. For those terminal devices 120j accessing the radio access network 100 via 120i, the terminal device 120i is a base station. However, for the base station 110a, 120i is a terminal device, that is, communication between 110a and 120i is performed based on a radio air interface protocol. Certainly, communication between 110a and 120i may alternatively be performed based on an interface protocol between base stations. In this case, for 110a, 120i is also a base station. Therefore, the base station and the terminal device may be collectively referred to as communication apparatuses, 110a and 110b in FIG. 1 may be referred to as communication apparatuses with the base station function, and 120a to 120j in FIG. 1 may be referred to as communication apparatuses with the terminal device function.

Communication between a base station and a terminal device, between base stations, or between terminal devices may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

Functions such as synchronization, channel estimation, and sensing may be implemented between the base station and the terminal device by using a sequence. In this embodiment of this application, the synchronization signal sent by the base station to the terminal device may include a long sequence. Correspondingly, the terminal device may receive the synchronization signal from the base station based on a type of the terminal device, to implement downlink synchronization. Synchronization may be understood as a process of establishing time synchronization and/or frequency synchronization between the base station and the terminal device. Specifically, a transmitter may send a specific sequence, that is, a long sequence. A receiver may detect the specific sequence. Then, the receiver may adjust timing of the receiver based on a time of the detected specific sequence, and/or the receiver may adjust a carrier frequency of the receiver based on a frequency of the detected specific sequence. Alternatively, then, the receiver may indicate the transmitter to adjust timing and/or a carrier frequency. For downlink, the transmitter may be a base station, and the receiver may be a terminal device. For uplink, the transmitter may be a terminal device, and the receiver may be a base station.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal device may alternatively be performed by a module (for example, a chip or a modem) in the terminal device, or may be performed by an apparatus including the function of the terminal device.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection to a cell controlled by the base station. The cell establishing the wireless connection to the terminal device is referred to as a serving cell of the terminal device. When the terminal device communicates with the serving cell, the terminal device is further interfered by a signal from a neighboring cell.

For example, the network device 110 provided in this embodiment of this application may be 110a or 110b in FIG. 1, and the terminal device 120 provided in this embodiment of this application may be any one of 120a to 120j in FIG. 1.

Optionally, a related function of the terminal device or the network device in embodiments of this application may be implemented by one device, may be jointly implemented by a plurality of devices, or may be implemented by one or more function modules in one device. This is not specifically limited in embodiments of this application. It may be understood that the foregoing function may be a network element in a hardware device, may be a software function running on dedicated hardware, a combination of hardware and software, or a virtualization function instantiated on a platform (for example, a cloud platform).

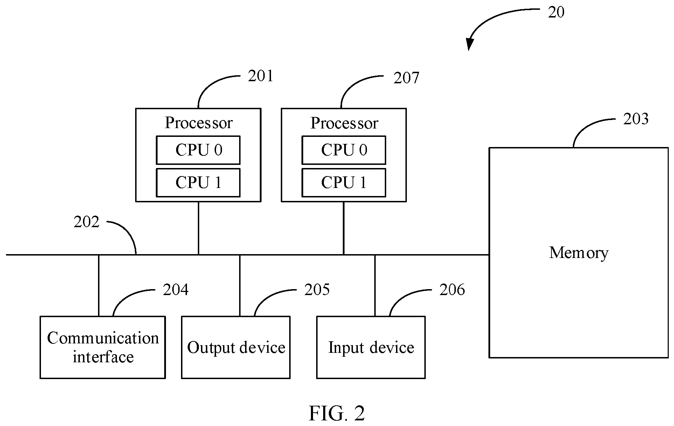

For example, the related functions of the terminal device or the network device in embodiments of this application may be implemented by a communication apparatus 20 in FIG. 2.

FIG. 2 is a diagram of a structure of a communication apparatus 20 according to an embodiment of this application. The communication apparatus 20 includes one or more processors 201, a communication line 202, and at least one communication interface (in FIG. 2, an example in which a communication interface 204 and one processor 201 are included is merely used for description). Optionally, the communication apparatus 20 may further include a memory 203.

The processor 201 may be a CPU, a microprocessor, an application-specific integrated circuit (application-specific integrated circuit, ASIC), or one or more integrated circuits for controlling solution program execution in this application.

The communication line 202 may include a path, used to connect different components.

The communication interface 204 may be a transceiver module, configured to communicate with another device or a communication network, for example, an Ethernet, a RAN, or a WLAN. For example, the transceiver module may be an apparatus like a transceiver or a transceiver machine. Optionally, the communication interface 204 may alternatively be a transceiver circuit located in the processor 201, and is configured to implement signal input and signal output of the processor.

The memory 203 may be an apparatus with the storage function. For example, the memory 203 may be a read-only memory (read-only memory, ROM) or another type of static storage device capable of storing static information and instructions, may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of instruction or data structure and capable of being accessed by a computer, but is not limited thereto. The memory may exist independently and is connected to the processor through the communication line 202. The memory may alternatively be integrated with the processor.

The memory 203 is configured to store computer-executable instructions for executing the solutions of this application, and the processor 201 controls execution. The processor 201 is configured to execute the computer-executable instructions stored in the memory 203, to implement a synchronization signal transmission method provided in embodiments of this application.

Alternatively, in embodiments of this application, the processor 201 may implement a processing-related function in the synchronization signal transmission method provided in the following embodiments of this application, and the communication interface 204 is responsible for communicating with the another device or the communication network. This is not specifically limited in embodiments of this application.

The computer-executable instructions in embodiments of this application may also be referred to as application code. This is not specifically limited in embodiments of this application.

During specific implementation, in an embodiment, the processor 201 may include one or more CPUs, for example, a CPU 0 and a CPU 1 in FIG. 2.

In a specific implementation, in an embodiment, the communication apparatus 20 may include a plurality of processors, such as the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 20 may further include an output device 205 and an input device 206. The output device 205 communicates with the processor 201, and may display information in a plurality of manners.

The communication apparatus 20 may be a general-purpose apparatus or a dedicated apparatus. For example, the communication apparatus 20 may be a desktop computer, a portable computer, a network server, a palmtop computer (personal digital assistant, PDA), a mobile phone, a tablet computer, a wireless terminal apparatus, a vehicle-mounted terminal apparatus, an embedded device, or a device with a structure similar to that in FIG. 2. A type of the communication apparatus 20 is not limited in embodiments of this application.

The following specifically describes a synchronization signal transmission method provided in embodiments of this application with reference to FIG. 1 and FIG. 2.

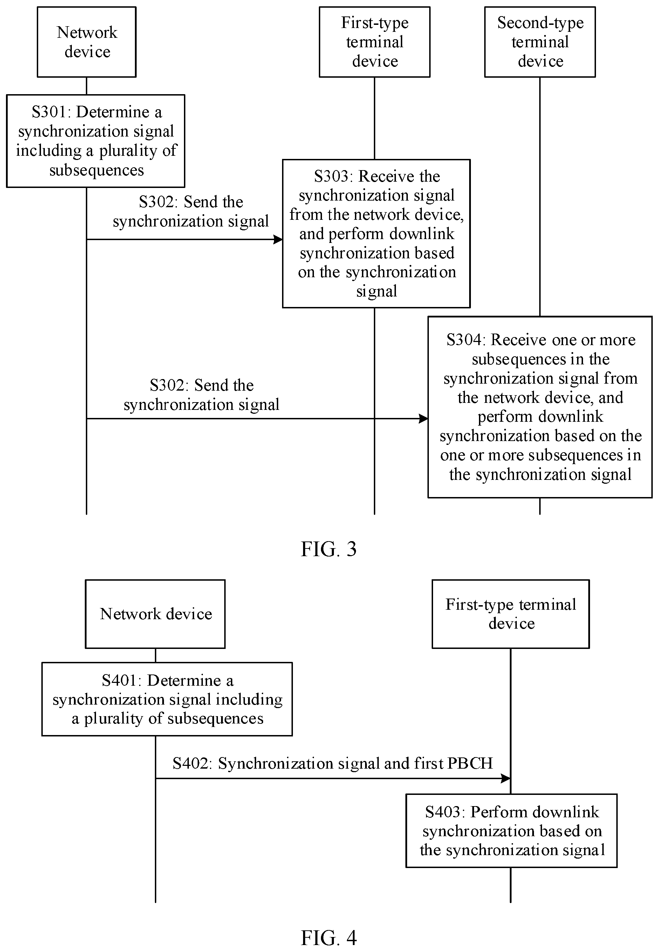

FIG. 3 shows a synchronization signal transmission method according to an embodiment of this application. The following steps are included.

Step S301: A network device determines a synchronization signal that includes a plurality of subsequences.

In this embodiment of this application, determining a signal may be understood as generating a signal or obtaining a predefined signal, and the determining manner is not limited.

A bandwidth of the synchronization signal is greater than or equal to a bandwidth of any one of the plurality of subsequences.

The plurality of subsequences in this embodiment of this application may form a complete sequence, that is, a long sequence included in the synchronization signal used in existing synchronization signal transmission methods. In this embodiment of this application, each subsequence may be mapped to a plurality of OFDM subcarriers in the frequency domain.

In this embodiment of this application, a quantity of subsequences included in the synchronization signal is greater than or equal to 2.

Optionally, the quantity of subsequences included in the synchronization signal is the same as a length of each subsequence included in the synchronization signal. In this solution, the long sequence may be equally divided into K subsequences, where K represents the quantity of subsequences included in the synchronization signal, and N represents the length of the subsequence may be re. For example, K=N=11. Simulation results show that in this solution, the subsequence has good ambiguity function performance. Specifically, the correlation value of the sequence has a low sidelobe at an incorrect delay and/or Doppler frequency offset.

In this embodiment of this application, K and N may differ. In addition, the plurality of subsequences included in the synchronization signal may have different lengths. In other words, the long sequence may be divided into K subsequences, with at least two of the K subsequences having different lengths. This is not limited in embodiments of this application.

Optionally, the subsequence included in the synchronization signal is a maximal length linear shift register sequence or a polyphase sequence.

Optionally, a first subsequence included in the synchronization signal is a polyphase sequence whose general term satisfies the following Formula (1): ${x}_{k} \left(n\right) = {e}^{- \frac{2 πj \left({an}^{p}+{bn}^{q}+cn+d\right)}{N}}$

Here, a, b, c, d, p, and q are constants; n=1, 2, ..., N, N represents the length of the first subsequence, and N is a positive integer; and k=1, 2, ..., K, K represents the quantity of subsequences included in the synchronization signal, and K is a positive integer. Specifically, if p=3 and q=2, the foregoing Formula (1) may be represented as Formula (2): ${x}_{k} \left(n\right) = {e}^{- \frac{2 πj \left({an}^{3}+{bn}^{2}+cn+d\right)}{N}}$

The synchronization signal in this embodiment of this application includes a PSS and/or an SSS.

Optionally, the PSS and the SSS contain the same quantity of subsequences and/or have subsequences of equal length. In this solution, the PSS and the SSS may have the same sequence structure design, that is, the same quantity and/or length of subsequences. This enables a terminal device, especially a second-type terminal device, to achieve similar reception performance for the PSS and the SSS. In other words, for the PSS and the SSS, the subsequence division methods are the same. When the PSS and the SSS contain the same quantity of subsequences, the long sequence may also be unequally divided into a plurality of subsequences.

In a possible implementation, the PSS and the SSS may have subsequences with the same quantity and length, and the general term of each subsequence may satisfy the foregoing Formula (1) or Formula (2).

Optionally, each subsequence included in the PSS or the SSS occupies the same time domain resource. In this solution, the plurality of subsequences included in the PSS or the SSS may be mapped to a plurality of consecutive OFDM subcarriers. Because in existing synchronization signal transmission methods, the long sequence included in the synchronization signal is mapped to the plurality of consecutive OFDM subcarriers. Therefore, this solution can improve compatibility with the existing synchronization signal transmission methods.

In this embodiment of this application, the PSS and the SSS may have different sequence structure designs, that is, different subsequence division manners. This is not limited in embodiments of this application.

In a possible implementation, the PSS and the SSS may have different sequence structure designs, but the general term of each subsequence may satisfy the foregoing Formula (1) or Formula (2).

Optionally, each subsequence included in the PSS occupies the same time domain resource, and each subsequence included in the SSS occupies the same frequency domain resource. In this solution, the plurality of subsequences included in the PSS may be mapped to a plurality of consecutive OFDM subcarriers. The plurality of subsequences included in the SSS may be mapped to a plurality of consecutive OFDM symbols, and each subsequence included in the SSS may be mapped to a plurality of consecutive OFDM subcarriers. For the terminal device, especially the second-type terminal device, the SSS may not be limited by a bandwidth, so that the SSS may include more subsequences or carry additional information.

Step S302: The network device sends the synchronization signal to the terminal device.

If the terminal device is a first-type terminal device, step S303 is performed.

Step S303: The terminal device receives the synchronization signal from the network device and performs downlink synchronization based on the synchronization signal.

Alternatively, if the terminal device is the second-type terminal device, step S304 is performed.

Step S304: The terminal device receives one or more subsequences in the synchronization signal from the network device and performs downlink synchronization based on the one or more subsequences in the synchronization signal.

For example, the second-type terminal device in this embodiment of this application may be an NB-IoT terminal device.

In the synchronization signal transmission method provided in this embodiment of this application, the synchronization signal may include the plurality of subsequences, so that a wideband terminal device may receive the synchronization signal including all the subsequences, and a narrowband terminal device may receive one or more subsequences in the synchronization signal. For the wideband terminal device and the narrowband terminal device, this embodiment of this application may adopt a same synchronization signal sending structure, so that complexity of designing a cellular network system can be reduced, and technical effect of saving time-frequency resources can be achieved.

Optionally, the synchronization signal transmission method provided in this embodiment of this application further includes: The network device sends a first PBCH to the terminal device. A bandwidth occupied by the first PBCH is wider than or equal to the bandwidth occupied by the synchronization signal. In this solution, respective PBCHs may be designed for two different types of terminal devices. The first PBCH is applicable to the wideband terminal device because the first PBCH occupies a large quantity of frequency domain resources. The first PBCH in this embodiment of this application may also be referred to as a wideband PBCH.

Optionally, the synchronization signal transmission method provided in this embodiment of this application further includes: The network device sends a second PBCH to the terminal device. The bandwidth occupied by the first PBCH is wider than a bandwidth occupied by the second PBCH. In this solution, respective PBCHs may be designed for two different types of terminal devices. The second PBCH is applicable to the narrowband terminal device because the second PBCH occupies a small quantity of frequency domain resources. The second PBCH in this embodiment of this application may also be referred to as a narrowband PBCH.

It should be noted that, before sending the first PBCH to the terminal device, the network device needs to determine the first PBCH. Before sending the second PBCH to the terminal device, the network device needs to determine the second PBCH.

In this embodiment of this application, determining a PBCH may be understood as generating a PBCH, or obtaining a predefined PBCH, and the determining manner is not limited.

Optionally, a frequency domain resource occupied by the first PBCH includes a frequency domain resource occupied by the synchronization signal.

Optionally, a frequency domain resource occupied by the synchronization signal includes a frequency domain resource occupied by the second PBCH.

If the terminal device is the first-type terminal device, the terminal device receives the first PBCH from the network device. Optionally, the terminal device may further receive the second PBCH from the network device.

Alternatively, if the terminal device is the second-type terminal device, the terminal device receives the second PBCH from the network device.

For example, the first-type terminal device in this embodiment of this application may be the wideband terminal device, and the second-type terminal device in this embodiment of this application may be the narrowband terminal device.

With reference to the foregoing descriptions of the synchronization signal and the first PBCH, in a possible implementation, FIG. 4 is a flowchart of a method for transmitting a synchronization signal and a PBCH according to an embodiment of this application. The following steps are included.

Step S401: A network device determines a synchronization signal including a plurality of subsequences.

For related descriptions of the step S401, refer to the step S301. Details are not described herein again.

Step S402: The network device sends the synchronization signal and a first PBCH to a terminal device. Correspondingly, if the terminal device is a first-type terminal device, the terminal device receives the synchronization signal and the first PBCH from the network device.

Specifically, the terminal device may receive system information included in the first PBCH, to facilitate subsequent signal processing.

Step S403: The terminal device performs downlink synchronization based on the synchronization signal.

Optionally, the network device may send a second PBCH to the terminal device. If the terminal device is the first-type terminal device, the terminal device may receive and parse the second PBCH, or the terminal device may not receive the second PBCH. This is not limited in this application.

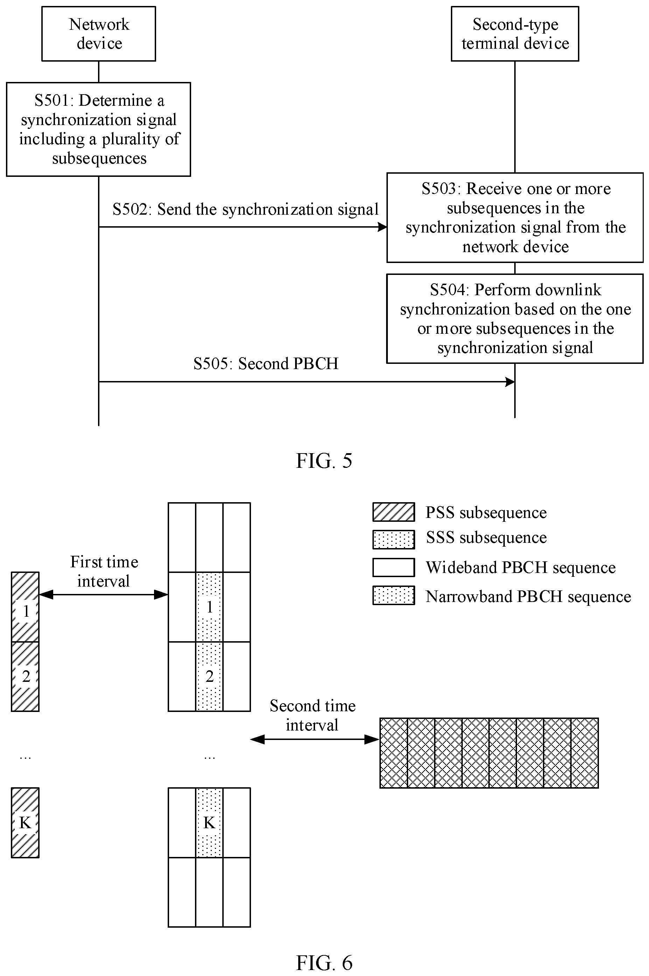

With reference to the foregoing descriptions of the synchronization signal and the second PBCH, in another possible implementation, FIG. 5 is another flowchart of a method for transmitting a synchronization signal and a PBCH according to an embodiment of this application. The following steps are included.

Step S501: A network device determines a synchronization signal including a plurality of subsequences.

For related descriptions of the step S501, refer to the step S301. Details are not described herein again.

Step S502: The network device sends the synchronization signal to a terminal device.

Optionally, the network device may further send a first PBCH to the terminal device. If the terminal device is a second-type terminal device, because a bandwidth of the first PBCH usually exceeds a receive bandwidth of the terminal device, the terminal device may not receive the first PBCH.

Step S503: If the terminal device is the second-type terminal device, the terminal device receives one or more subsequences in the synchronization signal from the network device.

Step S504: If the terminal device is the second-type terminal device, the terminal device performs downlink synchronization based on the one or more subsequences in the synchronization signal.

Step S505: The network device sends a second PBCH to the terminal device. Correspondingly, if the terminal device is the second-type terminal device, the terminal device receives the second PBCH from the network device.

Specifically, the terminal device may receive system information included in the second PBCH, to facilitate subsequent signal processing.

Optionally, step S504 may be performed before step S505, or step S505 may be performed before step S504, or step S504 and step S505 may be performed simultaneously. This is not limited in this embodiment of this application.

Optionally, the synchronization signal includes indication information, and the indication information indicates a time domain resource and/or a frequency domain resource occupied by the second PBCH. In this solution, the synchronization signal may include indication information indicating scheduling information of the second PBCH. In this embodiment of this application, a time-frequency resource position of the second PBCH may be flexible, and the synchronization signal may carry more information. Specifically, there may be a plurality of candidate positions for the time-frequency resource position occupied by the second PBCH, and a specific position may be indicated by the synchronization signal.

Optionally, the synchronization signal includes a beam index, and the beam index is used by the terminal device to send data and/or signaling on a beam corresponding to the beam index to the network device. This solution may be applied to non-initial access of the terminal device. For example, the terminal device requests to access the network device again after sleep ends. In this case, the terminal device does not need to receive the PBCH, and may directly send data and/or signaling to the network device on the beam corresponding to the beam index, thereby achieving technical effect of energy saving.

For example, the PSS and the SSS have a same sequence structure design. FIG. 6 is a diagram of a synchronization signal and a PBCH. 1, 2, ..., or K represents a number of a subsequence. In FIG. 6, long sequences included in a PSS and an SSS each may be equally divided into K subsequences. It is assumed that for the PSS and the SSS, K=N=11, and N represents a length of each subsequence. The 11 subsequences included in the PSS or the SSS may be mapped to a plurality of consecutive OFDM subcarriers. Alternatively, it is assumed that for the PSS and the SSS, K=3, and N=31; or it is assumed that for the PSS and the SSS, K=3, and N=41; or it is assumed that for the PSS and the SSS, K=3, and N=43.

A frequency domain range occupied by a wideband PBCH is greater than a frequency domain range occupied by the PSS or the SSS. On the contrary, a frequency domain range occupied by a narrowband PBCH is less than the frequency domain range occupied by the PSS or the SSS. A first time interval may be a difference between a minimum value in a time domain range occupied by the wideband PBCH and a maximum value in a time domain range occupied by the PSS. A second time interval may be a difference between a minimum value in a time domain range occupied by the narrowband PBCH and a maximum value in the time domain range occupied by the wideband PBCH.

The network device may send the PSS, the SSS, the wideband PBCH, and the narrowband PBCH. A wideband terminal device may receive the wideband PBCH, all PSS subsequences, and all SSS subsequences. A narrowband terminal device may receive the narrowband PBCH and a part of the PSS and the SSS, that is, one or M subsequences of the PSS and the SSS, where M is a positive integer less than 11.

As an example, FIG. 6 shows only a case in which a plurality of PSS or SSS subsequences are consecutive in frequency domain. In practice, there may further be an interval between the plurality of PSS or SSS subsequences in frequency domain. This is not limited in this embodiment of this application.

As an example, FIG. 6 shows only a case in which a frequency domain resource occupied by the wideband PBCH includes a frequency domain resource occupied by the PSS or the SSS. In practice, a bandwidth occupied by the wideband PBCH only needs to be wider than or equal to a bandwidth occupied by the PSS or the SSS. A frequency position relationship between the wideband PBCH and the synchronization signal is not limited in this embodiment of this application. Similarly, FIG. 6 shows only a case in which a frequency domain resource occupied by the PSS or the SSS includes a frequency domain resource occupied by a second PBCH. In practice, the bandwidth occupied by the PSS or the SSS only needs to be wider than or equal to a bandwidth occupied by the narrowband PBCH. A frequency position relationship between the synchronization signal and the narrowband PBCH is not limited in this embodiment of this application.

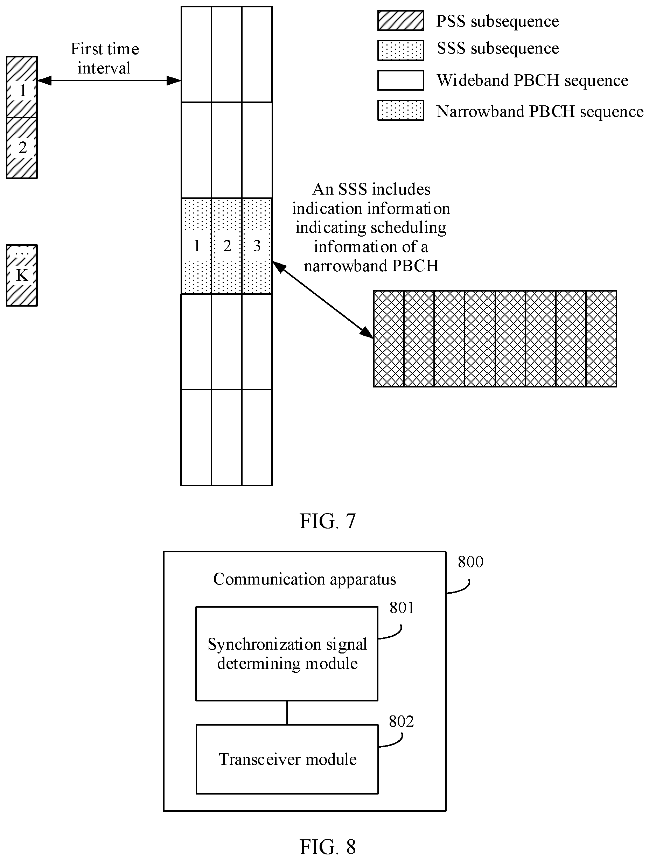

For example, the PSS and the SSS have different sequence structure designs. FIG. 7 is another diagram of a synchronization signal and a PBCH. 1, 2, ..., or K represents a number of a subsequence. In FIG. 7, it is assumed that for the PSS, K=N=11, which is exactly the same as the sequence structure design of the PSS in FIG. 6; or K=3, and N=31, 41, or 43; and for an SSS, K=3, and N=31, 41, or 43. 11 subsequences included in the PSS may be mapped to a plurality of consecutive OFDM subcarriers. Three subsequences included in the SSS may be mapped to a plurality of consecutive OFDM symbols, and each subsequence included in the SSS may be mapped to a plurality of consecutive OFDM subcarriers. A frequency domain range occupied by a wideband PBCH is greater than a frequency domain range occupied by the PSS or the SSS. On the contrary, a frequency domain range occupied by a narrowband PBCH is less than the frequency domain range occupied by the PSS or the SSS. A first time interval may be a difference between a minimum value in a time domain range occupied by the wideband PBCH and a maximum value in a time domain range occupied by the PSS. The SSS may include indication information indicating scheduling information of the narrowband PBCH.

A network device may send the PSS, the SSS, the wideband PBCH, and the narrowband PBCH. A wideband terminal device may receive the wideband PBCH, all SSS subsequences, and all PSS subsequences. A narrowband terminal device may receive the narrowband PBCH, the SSS, and a part of the PSS, that is, one or M subsequences of the PSS, where M is a positive integer less than 11.

As an example, FIG. 7 shows only a case in which a plurality of PSS subsequences are consecutive in frequency domain and a plurality of SSS subsequences are consecutive in time domain. In practice, there may further be an interval between the plurality of PSS subsequences in frequency domain, and/or there may further be an interval between the plurality of SSS subsequences in time domain. This is not limited in this embodiment of this application.

It may be understood that, in the foregoing embodiments, the methods and/or the steps implemented by the network device may alternatively be implemented by a component (for example, a chip or a circuit) that may be used in the network device or an apparatus including the network device; and the methods and/or the steps implemented by the terminal device may alternatively be implemented by a component (for example, a chip or a circuit) that may be used in the terminal device or an apparatus including the terminal device.

It may be understood that, to implement the foregoing functions, the network device or the terminal device includes corresponding hardware structures and/or software modules for implementing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the network device or the terminal device is divided into functional modules based on the foregoing method embodiments. For example, each functional module may be divided to each corresponding function, or two or more functions may be integrated into one processing module. The integrated module may be implemented in a form of hardware, or may be implemented in a form of software functional module. It should be noted that, in embodiments of this application, module division is an example, and is merely a logical function division. In practice, another division manner may be used.

For example, the network device in embodiments of this application may be implemented in a form of communication apparatus 800 shown in FIG. 8. The communication apparatus 800 may include a synchronization signal determining module 801 and a transceiver module 802. The communication apparatus 800 is configured to implement the functions of the terminal apparatus in the foregoing method embodiments shown in FIG. 3 to FIG. 7.

For example, when the communication apparatus 800 is configured to implement functions of the network device in the method embodiment shown in FIG. 3, the synchronization signal determining module 801 is configured to determine a synchronization signal including a plurality of subsequences; and the transceiver module 802 is configured to send the synchronization signal to a terminal device.

For more detailed descriptions of the synchronization signal determining module 801 and the transceiver module 802, refer to related descriptions in the method embodiments shown in FIG. 3 to FIG. 7.

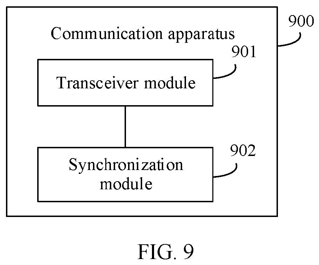

For another example, the terminal device in embodiments of this application may be implemented in a form of communication apparatus 900 shown in FIG. 9. The communication apparatus 900 may include a transceiver module 901 and a synchronization module 902. The communication apparatus 900 is configured to implement the functions of the terminal device in the foregoing method embodiments shown in FIG. 3 to FIG. 7.

For example, if the terminal device is a first-type terminal device, the transceiver module 901 is configured to receive a synchronization signal, and the synchronization module 902 is configured to perform downlink synchronization based on the synchronization signal. If the terminal device is a second-type terminal device, the transceiver module 901 is configured to receive one or more subsequences in the synchronization signal, and the synchronization module 902 is configured to perform downlink synchronization based on the one or more subsequences in the synchronization signal.

For more detailed descriptions of the transceiver module 901 and the synchronization module 902, refer to related descriptions in the method embodiments shown in FIG. 3 to FIG. 7.

In this embodiment, the communication apparatus 800 or the communication apparatus 900 is presented in a form of functional modules obtained through division in an integrated manner. The module herein may be an ASIC, a circuit, a processor that executes one or more software or firmware programs, a memory, an integrated logic circuit, and/or another component capable of providing the foregoing functions.

In a simple embodiment, a person skilled in the art may figure out that the communication apparatus 900 may be in a form of communication apparatus 20 shown in FIG. 2.

For example, the processor 201 and/or the processor 207 in the communication apparatus 20 shown in FIG. 2 may invoke the computer-executable instructions stored in the memory 203, so that the communication apparatus 20 performs the synchronization signal transmission method in the foregoing method embodiments. Specifically, a part of the functions/implementation process of the synchronization signal determining module 801 in FIG. 8 may be implemented by the processor 201 and/or the processor 207 in the communication apparatus 20 shown in FIG. 2 by invoking the computer-executable instructions stored in the memory 203. A part of the functions/implementation process of the transceiver module 802 in FIG. 8 may be implemented by a communication module connected to the communication interface 204 in FIG. 2.

In a simple embodiment, a person skilled in the art may figure out that the communication apparatus 900 may be in a form of communication apparatus 20 shown in FIG. 2.

For example, the processor 201 and/or the processor 207 in the communication apparatus 20 shown in FIG. 2 may invoke the computer-executable instructions stored in the memory 203, so that the communication apparatus 20 performs the synchronization signal transmission method in the foregoing method embodiments. Specifically, a part of the functions/implementation process of the transceiver module 901 in FIG. 9 may be implemented by a communication module connected to the communication interface 204 in FIG. 2. A part of the functions/implementation process of the synchronization module 902 in FIG. 9 may be implemented by the processor 201 and/or the processor 207 in the communication apparatus 20 shown in FIG. 2 by invoking the computer-executable instructions stored in the memory 203.

The communication apparatus 800 and the communication apparatus 900 provided in embodiments may perform the synchronization signal transmission method. Therefore, for technical effect that can be achieved by the communication apparatus 800 and the communication apparatus 900, refer to the foregoing method embodiments. Details are not described herein again.

It should be noted that one or more of the foregoing modules or units may be implemented by using software, hardware, or a combination thereof. When any one of the foregoing modules or units is implemented by using software, the software exists in a form of computer program instructions, and is stored in a memory. A processor may be configured to: execute the program instructions and implement the foregoing method procedures. The processor may be built in an SoC (system on chip) or an ASIC, or may be an independent semiconductor chip. The processor may further include a necessary hardware accelerator, for example, a field programmable gate array (field programmable gate array, FPGA), a PLD (programmable logic device), or a logic circuit that implements special logic operations, in addition to the core for executing software instructions to perform operations or processing.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including: at least one processor and an interface, where the at least one processor is coupled to a memory through an interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in embodiments of this application.

All or a part of the foregoing embodiments may be implemented by using software, hardware, firmware, or any composition thereof. When a software program is used to implement embodiments, embodiments may be implemented completely or partially in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement another variation of disclosed embodiments by viewing accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims of this application and their equivalent technologies.

## Claims

1. A synchronization signal transmission method, comprising:
determining a synchronization signal comprising a plurality of subsequences, wherein each of the plurality of subsequences is mapped to an orthogonal frequency division multiplexing OFDM subcarrier, and a bandwidth of the synchronization signal is greater than or equal to a bandwidth of any one of the plurality of subsequences; and
sending the synchronization signal to a terminal device, wherein the synchronization signal is used by the terminal device to perform downlink synchronization.

2. The method according to claim 1, wherein a quantity of subsequences comprised in the synchronization signal is the same as a length of each subsequence comprised in the synchronization signal.

3. The method according to claim 1 or 2, wherein a subsequence comprised in the synchronization signal is a maximal length linear shift register sequence or a polyphase sequence.

4. The method according to claim 1 or 2, wherein a first subsequence comprised in the synchronization signal is a polyphase sequence, and a general term of the first subsequence satisfies the following formula: ${x}_{k} \left(n\right) = {e}^{- \frac{2 πj \left({an}^{p}+{bn}^{q}+cn+d\right)}{N}} ,$ wherein
a, b, c, d, p, and q are constants; n=1, 2, ..., N, N represents a length of the first subsequence, and N is a positive integer; and k=1, 2, ..., K, K represents the quantity of subsequences comprised in the synchronization signal, and K is a positive integer.

5. The method according to any one of claims 1 to 4, wherein the synchronization signal comprises a primary synchronization signal PSS and/or a secondary synchronization signal SSS.

6. The method according to claim 5, wherein a quantity of subsequences comprised in the PSS is the same as a quantity of subsequences comprised in the SSS, and/or a length of each subsequence comprised in the synchronization signal is the same.

7. The method according to claim 5 or 6, wherein each subsequence comprised in the PSS or the SSS occupies a same time domain resource.

8. The method according to claim 5 or 6, wherein each subsequence comprised in the PSS occupies a same time domain resource, and each subsequence comprised in the SSS occupies a same frequency domain resource.

9. The method according to any one of claims 1 to 8, wherein the method further comprises:
sending a first physical broadcast channel PBCH, wherein a bandwidth occupied by the first PBCH is wider than or equal to the bandwidth occupied by the synchronization signal.

10. The method according to claim 9, wherein a frequency domain resource occupied by the first PBCH comprises a frequency domain resource occupied by the synchronization signal.

11. The method according to any one of claims 1 to 10, wherein the method further comprises:
sending a second PBCH, wherein the bandwidth occupied by the first PBCH is wider than a bandwidth occupied by the second PBCH.

12. The method according to claim 11, wherein the frequency domain resource occupied by the synchronization signal comprises a frequency domain resource occupied by the second PBCH.

13. The method according to claim 11 or 12, wherein the synchronization signal comprises indication information, and the indication information indicates a time domain resource and/or the frequency domain resource occupied by the second PBCH.

14. The method according to any one of claims 1 to 13, wherein the synchronization signal comprises a beam index, and the beam index is used by the terminal device to send data and/or signaling on a beam corresponding to the beam index.

15. A synchronization signal transmission method, applied to a terminal device, comprising:
when the terminal device is a first-type terminal device, receiving a synchronization signal, wherein the synchronization signal comprises a plurality of subsequences, each of the plurality of subsequences is mapped to an orthogonal frequency division multiplexing OFDM subcarrier, and a bandwidth of the synchronization signal is greater than or equal to a bandwidth of any one of the plurality of subsequences; and performing downlink synchronization based on the synchronization signal; or
when the terminal device is a second-type terminal device, receiving one or more subsequences in the synchronization signal; and performing downlink synchronization based on the one or more subsequences in the synchronization signal,
wherein a receive bandwidth by the first-type terminal device is wider than a receive bandwidth by the second-type terminal device.

16. The method according to claim 15, wherein a quantity of subsequences comprised in the synchronization signal is the same as a length of each subsequence comprised in the synchronization signal.

17. The method according to claim 15 or 16, wherein a subsequence comprised in the synchronization signal is a maximal length linear shift register sequence or a polyphase sequence.

18. The method according to claim 15 or 16, wherein a first subsequence comprised in the synchronization signal is a polyphase sequence, and a general term of the first subsequence satisfies the following formula: ${x}_{k} \left(n\right) = {e}^{- \frac{2 πj \left({an}^{p}+{bn}^{q}+cn+d\right)}{N}} ,$ wherein
a, b, c, d, p, and q are constants; n=1, 2, ..., N, N represents a length of the first subsequence, and N is a positive integer; and k=1, 2, ..., K, K represents the quantity of subsequences comprised in the synchronization signal, and K is a positive integer.

19. The method according to any one of claims 15 to 18, wherein the synchronization signal comprises a primary synchronization signal PSS and/or a secondary synchronization signal SSS.

20. The method according to claim 19, wherein a quantity of subsequences comprised in the PSS is the same as a quantity of subsequences comprised in the SSS, and/or a length of each subsequence comprised in the synchronization signal is the same.

21. The method according to claim 19 or 20, wherein each subsequence comprised in the PSS or the SSS occupies a same time domain resource.

22. The method according to claim 19 or 20, wherein each subsequence comprised in the PSS occupies a same time domain resource, and each subsequence comprised in the SSS occupies a same frequency domain resource.

23. The method according to any one of claims 15 to 22, wherein the terminal device is the first-type terminal device, and the method further comprises: receiving a first PBCH, wherein a bandwidth occupied by the first PBCH is wider than or equal to the bandwidth occupied by the synchronization signal.

24. The method according to claim 23, wherein a frequency domain resource occupied by the first PBCH comprises a frequency domain resource occupied by the synchronization signal.

25. The method according to any one of claims 15 to 22, wherein the terminal device is the second-type terminal device, and the method further comprises: receiving a second PBCH, wherein a bandwidth occupied by the first PBCH is wider than a bandwidth occupied by the second PBCH.

26. The method according to claim 25, wherein a frequency domain resource occupied by the synchronization signal comprises a frequency domain resource occupied by the second PBCH.

27. The method according to claim 25 or 26, wherein the synchronization signal comprises indication information, and the indication information indicates a time domain resource and/or the frequency domain resource occupied by the second PBCH.

28. The method according to any one of claims 15 to 27, wherein the synchronization signal comprises a beam index, and the beam index is used by the terminal device to send data and/or signaling on a beam corresponding to the beam index.

29. A communication apparatus, wherein the communication apparatus comprises: a synchronization signal determining module and a transceiver module;
the synchronization signal determining module is configured to determine a synchronization signal comprising a plurality of subsequences, wherein the plurality of subsequences form a long sequence, each of the plurality of subsequences is mapped to an orthogonal frequency division multiplexing OFDM subcarrier, and a bandwidth of the synchronization signal is greater than or equal to a bandwidth of any one of the plurality of subsequences; and
the transceiver module is configured to send the synchronization signal to a terminal device, wherein the synchronization signal is used by the terminal device to perform downlink synchronization.

30. The communication apparatus according to claim 29, wherein a quantity of subsequences comprised in the synchronization signal is the same as a length of each subsequence comprised in the synchronization signal.

31. The communication apparatus according to claim 29 or 30, wherein a subsequence comprised in the synchronization signal is a maximal length linear shift register sequence or a polyphase sequence.

32. The communication apparatus according to claim 29 or 30, wherein a first subsequence comprised in the synchronization signal is a polyphase sequence, and a general term of the first subsequence satisfies the following formula: ${x}_{k} \left(n\right) = {e}^{- \frac{2 πj \left({an}^{p}+{bn}^{q}+cn+d\right)}{N}} ,$ wherein
a, b, c, d, p, and q are constants; n=1, 2, ..., N, N represents a length of the first subsequence, and N is a positive integer; and k=1, 2, ..., K, K represents the quantity of subsequences comprised in the synchronization signal, and K is a positive integer.

33. The communication apparatus according to any one of claims 29 to 32, wherein the synchronization signal comprises a primary synchronization signal PSS and/or a secondary synchronization signal SSS.

34. The communication apparatus according to claim 33, wherein a quantity of subsequences comprised in the PSS is the same as a quantity of subsequences comprised in the SSS, and/or a length of each subsequence comprised in the synchronization signal is the same.

35. The communication apparatus according to claim 33 or 34, wherein each subsequence comprised in the PSS or the SSS occupies a same time domain resource.

36. The communication apparatus according to claim 33 or 34, wherein each subsequence comprised in the PSS occupies a same time domain resource, and each subsequence comprised in the SSS occupies a same frequency domain resource.

37. The communication apparatus according to any one of claims 29 to 36, wherein the transceiver module is further configured to send a first physical broadcast channel PBCH, wherein a bandwidth occupied by the first PBCH is wider than or equal to the bandwidth occupied by the synchronization signal.

38. The communication apparatus according to claim 37, wherein a frequency domain resource occupied by the first PBCH comprises a frequency domain resource occupied by the synchronization signal.

39. The communication apparatus according to any one of claims 29 to 38, wherein the transceiver module is further configured to send a second PBCH, wherein the bandwidth occupied by the first PBCH is wider than a bandwidth occupied by the second PBCH.

40. The communication apparatus according to claim 39, wherein the frequency domain resource occupied by the synchronization signal comprises a frequency domain resource occupied by the second PBCH.

41. The communication apparatus according to claim 39 or 40, wherein the synchronization signal comprises indication information, and the indication information indicates a time domain resource and/or the frequency domain resource occupied by the second PBCH.

42. The communication apparatus according to any one of claims 29 to 41, wherein the synchronization signal comprises a beam index, and the beam index is used by the terminal device to send data and/or signaling to the communication apparatus on a beam corresponding to the beam index.

43. A communication apparatus, wherein the communication apparatus comprises a transceiver module and a synchronization module; and
when the communication apparatus is a first-type communication apparatus, the transceiver module is configured to receive a synchronization signal from a network device, wherein the synchronization signal comprises a plurality of subsequences, the plurality of subsequences form a long sequence, each of the plurality of subsequences is mapped to an orthogonal frequency division multiplexing OFDM subcarrier, and a bandwidth of the synchronization signal is greater than or equal to a bandwidth of any one of the plurality of subsequences; and the synchronization module is configured to perform downlink synchronization based on the synchronization signal; or
when the communication apparatus is a second-type communication apparatus, the transceiver module is configured to receive one or more subsequences in the synchronization signal from the network device; and the synchronization module is configured to perform downlink synchronization based on the one or more subsequences in the synchronization signal,
wherein a receive bandwidth by the first-type communication apparatus is wider than a receive bandwidth by the second-type communication apparatus.

44. The communication apparatus according to claim 43, wherein a quantity of subsequences comprised in the synchronization signal is the same as a length of each subsequence comprised in the synchronization signal.

45. The communication apparatus according to claim 43 or 44, wherein a subsequence comprised in the synchronization signal is a maximal length linear shift register sequence or a polyphase sequence.

46. The communication apparatus according to claim 43 or 44, wherein a first subsequence comprised in the synchronization signal is a polyphase sequence, and a general term of the first subsequence satisfies the following formula: ${x}_{k} \left(n\right) = {e}^{- \frac{2 πj \left({an}^{p}+{bn}^{q}+cn+d\right)}{N}} ,$ wherein
a, b, c, d, p, and q are constants; n=1, 2, ..., N, N represents a length of the first subsequence, and N is a positive integer; and k=1, 2, ..., K, K represents the quantity of subsequences comprised in the synchronization signal, and K is a positive integer.

47. The communication apparatus according to any one of claims 43 to 46, wherein the synchronization signal comprises a primary synchronization signal PSS and/or a secondary synchronization signal SSS.

48. The communication apparatus according to claim 47, wherein a quantity of subsequences comprised in the PSS is the same as a quantity of subsequences comprised in the SSS, and/or a length of each subsequence comprised in the synchronization signal is the same.

49. The communication apparatus according to claim 47 or 48, wherein each subsequence comprised in the PSS or the SSS occupies a same time domain resource.

50. The communication apparatus according to claim 47 or 48, wherein each subsequence comprised in the PSS occupies a same time domain resource, and each subsequence comprised in the SSS occupies a same frequency domain resource.

51. The communication apparatus according to any one of claims 43 to 50, wherein the communication apparatus is the first-type communication apparatus, and the transceiver module is further configured to receive a first PBCH, wherein a bandwidth occupied by the first PBCH is wider than or equal to the bandwidth occupied by the synchronization signal.

52. The communication apparatus according to claim 51, wherein a frequency domain resource occupied by the first PBCH comprises a frequency domain resource occupied by the synchronization signal.

53. The communication apparatus according to any one of claims 43 to 50, wherein the communication apparatus is the second-type communication apparatus, and the transceiver module is further configured to receive a second PBCH, wherein a bandwidth occupied by a first PBCH is wider than a bandwidth occupied by the second PBCH.

54. The communication apparatus according to claim 53, wherein a frequency domain resource occupied by the synchronization signal comprises a frequency domain resource occupied by the second PBCH.

55. The communication apparatus according to claim 53 or 54, wherein the synchronization signal comprises indication information, and the indication information indicates a time domain resource and/or the frequency domain resource occupied by the second PBCH.

56. The communication apparatus according to any one of claims 43 to 55, wherein the synchronization signal comprises a beam index, and the beam index is used by the communication apparatus to send data and/or signaling to the network device on a beam corresponding to the beam index.

57. A communication apparatus, comprising a memory and a processor coupled to the memory, wherein the memory is configured to store a program, the processor is configured to execute the program stored in the memory, and when the communication apparatus runs, the processor runs the program, so that the communication apparatus performs the method according to any one of claims 1 to 14, or the communication apparatus performs the method according to any one of claims 15 to 28.

58. A communication system, wherein the communication system comprises a network device and a terminal device, the network device is configured to perform the method according to any one of claims 1 to 14, and the terminal device is configured to perform the method according to any one of claims 15 to 28.

59. A computer-readable storage medium, wherein the computer-readable storage medium stores a computer program, and when the computer program is executed by a computer, the computer is enabled to perform the method according to any one of claims 1 to 14, or when the computer program is executed by a computer, the computer is enabled to perform the method according to any one of claims 15 to 28.

60. A computer program product, wherein the computer program product comprises computer instructions; and when the computer instructions are run on a computer, the computer is enabled to perform the method according to any one of claims 1 to 14, or the computer is enabled to perform the method according to any one of claims 15 to 28.
